# EUROPEAN PATENT SPECIFICATION

(11) **EP 2 778 199 B1**
(45) Date of publication and mention of the grant of the patent: **17.05.2017**
(21) Application number: 12857640.2
(22) Date of filing: 29.11.2012
(51) Int. Cl.: C08L 71/10, C08L 27/18, C08L 71/00

(54) **RESIN COMPOSITION AND MOLDED ARTICLE**
HARZZUSAMMENSETZUNG UND FORMARTIKEL
COMPOSITION DE RÉSINE ET ARTICLE MOULÉ

(30) Priority: 13.12.2011 JP 2011272464
(43) Date of publication of application: 17.09.2014
(73) Proprietor: Daikin Industries, Ltd., Osaka-shi, Osaka 530-8323 (JP)
(72) Inventor: MASUDA Haruhisa, Osaka-shi Osaka 530-8323 (JP); ADACHI Yuki, Osaka-shi Osaka 530-8323 (JP)
(74) Representative: Hoffmann Eitle
(86) International application number: PCT/JP2012/080913
(87) International publication number: WO 2013/088964

(56) References cited:
- EP-A1- 1 077 230
- EP-A1- 2 019 853
- CN-A- 101 880 436
- CN-A- 101 880 436
- JP-A- H0 971 704
- JP-A- H06 136 255
- JP-A- 2006 274 073
- JP-A- 2009 052 028
- JP-A- 2009 068 390
- US-A1- 2002 168 506

## Description

### TECHNICAL FIELD

The present invention relates to a resin composition and a molded article.

### BACKGROUND ART

Switching from metal components to resin components has recently been actively studied for the purposes of weight saving and cost reduction. The studies have led to practical use of vehicle components, industrial components, and electrical and electronic components formed using a thermoplastic resin such as a polyamide resin, a polycarbonate resin, and a polyacetal resin. Also for use as sliding parts including gears and bearing retainers, metal sliding parts have been more and more replaced by resin sliding parts. These thermoplastic resins, however, are insufficient in wear properties or wear resistance properties, as the sliding parts are used under such conditions as a high load, a high temperature, and a high rotation speed. Thermoplastic resin therefore may cause problems such as wear, fusion, cracking, and chipping.

Meanwhile, fluororesins are excellent in wear properties or wear resistance properties, heat resistance, chemical resistance, solvent resistance, weather resistance, flexibility, electrical properties, and other properties, and are thus used in various fields, including cars, industrial machines, OA equipment, and electrical and electronic equipment. In particular, fluororesins have excellent wear properties or wear resistance properties, and are one of the resins having a notably low friction coefficient. Fluororesins, however, have inferior mechanical properties and physical heat resistance represented by, for example, deflection temperature under load, compared to crystalline heat-resistant thermoplastic resins in many cases. Also, in some cases, fluororesins have inferior dimensional stability compared to amorphous heat-resistant thermoplastic resins. Hence, the range of use of fluororesins has been limited.

Accordingly, thermoplastic resins have been studied for the purpose of improving their wear properties or wear resistance properties and applying them to sliding parts in wider fields. For example, Patent Literature 1 discloses a resin composition containing 1 to 50 parts by weight in total of a fluororesin and graphite for each 100 parts by weight of a resin composition that consists of 60 to 99 parts by weight of a thermoplastic resin having a heat deformation temperature of 100°C or higher and 40 to 1 part by weight of carbon fibers. Patent Literature 2 discloses a resin composition containing a thermoplastic heat-resistant resin (A) having a molding temperature of 300°C or higher, and a polymer (B) obtained by polymerization of an essential component of fluoroacryl α-fluoroacrylate that has a specific structure. Patent Literature 3 proposes a resin composition containing (A) 70 to 99% by mass of a polyaryl ketone resin and (B) 30 to 1% by mass of fluororesin, wherein the fluororesin (B) dispersed in the resin composition has an average particle size of 0.1 to 30 µm.

Patent Literature 4 proposes a resin composition containing a resin (component (A)) other than fluororesin and a fluororesin (component (B)), which has a sea-island structure where the fluororesin (component (B)) constituting the island phase is dispersed in the resin (component (A)) other than fluororesin constituting the sea phase, and the island-phase fluororesin (component (B)) has an average particle size of 200 µm or smaller. Patent Literature 5 proposes a polyimide resin composition substantially containing 1 to 40 parts by weight of a fluororesin having a melt flow index at 400°C and 10 kg of 4.0 to 15.0 g/10 min for each 100 parts by weight in total of a resin composition consisting of a polyimide resin (40 to 95 parts by weight) having a specific repeating unit and a polyallyl ether ketone (60 to 5 parts by weight). Patent Literature 6 proposes a modified engineering plastic formed by cross-linking a mixture of an engineering plastic and a fluororesin. Patent Literature 7 proposes a thermoplastic resin composition containing 5 to 40 parts by mass of a fluororesin and 95 to 60 parts by mass of another thermoplastic resin, wherein at least part of the carbon atoms constituting the fluororesin molecular chain has a cross-linking structure with other carbon atoms constituting the molecular chain and at least part of the fluororesin molecules has an active terminus.

Fluororesins are also known to be added to a thermoplastic resin for purposes other than improvement of the wear properties or wear resistance properties. For example, Patent Literature 8 discloses a technique of improving the mold-processability , including decreasing the extrusion pressure and extrusion torque, in the mold-processing of engineering plastics. The technique includes adding 0.005 to 1% by mass of a fluoropolymer based on the total mass of the engineering plastics and the fluoropolymer. Patent Literature 9 discloses a technique of mixing PEEK resin fine powder in an aqueous dispersion of a PFA resin at a PFA:PEEK ratio by weight of 75:25 to 70:30, directly applying the dispersion to a roughened metal surface in accordance with common methods, and baking the resulting product, so that a PFA-PEEK composite coating film having adhesion durability is formed. Patent Literature 10 discloses a thermoplastic resin composition containing a mixture of polyaryl ketone resin and thermoplastic fluororesin, wherein the thermoplastic fluororesin constitutes a continuous phase of the mixture and the polyaryl ketone resin constitutes a dispersion phase thereof. Patent Literature 11 proposes a polyaryl ketone film as a material for providing a film having a high Young's modulus, low dielectric constant, excellent flame retardancy, heat resistance, and insulation properties, and high rigidity, and a FPC including this film as the substrate thereof, wherein the polyaryl ketone film includes a resin composition containing polyaryl ketone and another thermoplastic resin in an amount of 3 to 30 parts by weight for each 100 parts by weight of the polyaryl ketone, and the film has a cushion rate of 3 to 30% and is stretched in at least one direction.

Polyether ether ketone (PEEK) resin has comparatively favorable wear properties or wear resistance properties among the thermoplastic resins, and thus has been put into practical use for sliding parts, such as gears and bearing retainers. The wear properties or wear resistance properties, however, are still insufficient under severe sliding conditions such as a high load. In order to improve the wear properties or wear resistance properties of PEEK, PEEK compositions containing PTFE powder have been developed and been commercially available. The PEEK compositions containing PTFE powder indeed have a decreased coefficient of kinetic friction, but have low wear properties or wear resistance properties which are represented by a limiting PV value. For this reason, the wear properties or wear resistance properties are desired to be further improved.

Patent Literature 12 discloses a resin composition for mold product as sliding part, comprising an aromatic polyether ketone resin and a fluororesin.

### CITATION LIST

### - Patent Literature

Patent Literature 1: JP H08-48887 A
Patent Literature 2: JP H10-195302 A
Patent Literature 3: JP 2006-274073 A
Patent Literature 4: JP 2002-235011 A
Patent Literature 5: JP H09-87517 A
Patent Literature 6: JP 2002-146202 A
Patent Literature 7: JP 2004-137363 A
Patent Literature 8: WO 2003/044093
Patent Literature 9: JP H06-316686 A
Patent Literature 10: JP 2010-189599 A
Patent Literature 11: JP 2003-82123 A
Patent Literature 12: CN 101880436

### SUMMARY OF INVENTION

### - Technical Problem

The present invention therefore aims to provide a resin composition that enables to obtain a molded article having both a low coefficient of kinetic friction and a high limiting PV value.

### - Solution to Problem

The present inventors have studied a resin composition which can provide a molded article having both a low coefficient of kinetic friction and a high limiting PV value, and they have focused on a resin composition containing an aromatic polyether ketone resin and a fluororesin. Then, they have found that the use of a resin composition in which a specific fluororesin with a specific average dispersed particle size is dispersed in an aromatic polyether ketone resin, and the aromatic polyether ketone resin and the fluororesin satisfy a specific melt viscosity ratio markedly improves the slidability in relation to the coefficient of kinetic friction and the limiting PV value of the resulting molded article. As a result, they have completed the present invention.

That is, one aspect of the present invention is a resin composition including an aromatic polyether ketone resin (I) and a fluororesin (II), the fluororesin (II) being a copolymer of tetrafluoroethylene and a perfluoroethylenic unsaturated compound represented by the following formula (1):

CF₂=CF-Rf¹ (1)

wherein Rf¹ represents -CF₃; the aromatic polyether ketone resin (I) and the fluororesin (II) satisfying a ratio (I):(II) by mass of 95:5 to 50:50; the aromatic polyether ketone resin (I) and the fluororesin (II) satisfying a melt viscosity ratio (I)/(II) of 0.3 to 2.5, the melt viscosity of resins (I) and (II) being measured at 60 sec⁻¹ and 390°C in conformity with ASTM D3835; the fluororesin (II) being dispersed as particles in the aromatic polyether ketone resin (I); the fluororesin (II) having an average dispersed particle size of smaller than 3.0 µm.

The resin composition of the present invention preferably satisfies that the fluororesin (II) is dispersed as particles in the aromatic polyether ketone resin (I), and the fluororesin (II) has an average dispersed particle size of smaller than 0.3 µm and a maximum dispersed particle size of not larger than 0.8 µm.

The fluororesin (II) preferably has a melt flow rate of 0.1 to 100 g/10 min, the melt flow rate being the mass (g/10 min) of the polymer flowing out from a nozzle at 372°C under a load of 5000 g, which is determined using a melt indexer in conformity with ASTM D3307-01.

The aromatic polyether ketone resin (I) is preferably a polyether ether ketone.

Another aspect of the present invention is a molded article including the above resin composition.

The molded article of the present invention is preferably used as a sliding part.

The molded article of the present invention is preferably a sealant, a gear, an actuator, a piston, a bearing, or a bushing.

### - Advantageous Effects of Invention

Since the resin composition of the present invention has the above structure, a molded article having a low coefficient of kinetic friction and a high limiting PV value can be obtained. The molded article to be obtained also has excellent wear properties or wear resistance properties.

### DESCRIPTION OF EMBODIMENTS

The present invention is described in detail below.

The resin composition of the present invention includes an aromatic polyether ketone resin (I) and a fluororesin (II).

The aromatic polyether ketone resin (I) is preferably at least one resin selected from the group consisting of polyether ketone, polyether ether ketone, polyether ketone ketone, and polyether ketone ether ketone ketone. The aromatic polyether ketone resin (I) is more preferably at least one resin selected from the group consisting of polyether ketone and polyether ether ketone, and still more preferably polyether ether ketone.

The aromatic polyether ketone resin (I) preferably has a melt viscosity of 0.25 to 1.50 kNsm⁻² at 60 sec⁻¹ and 390°C. A melt viscosity within the above range can improve the processability, and enables to provide a molded article having a low coefficient of kinetic friction and high limit PV characteristics. The lower limit of the melt viscosity is preferably 0.80 kNsm⁻². The upper limit of the melt viscosity is preferably 1.30 kNsm⁻².

The melt viscosity of the aromatic polyether ketone resin (I) is measured in conformity with ASTM D3835.

The aromatic polyether ketone resin (I) preferably has a glass transition temperature of 130°C or higher. The glass transition temperature is more preferably 135°C or higher, and still more preferably 140°C or higher. A glass transition temperature within the above range enables to obtain a resin composition having excellent heat resistance. The glass transition temperature is measured using a device for differential scanning calorimetry (DSC).

The aromatic polyether ketone resin (I) preferably has a melting point of 300°C or higher. The melting point is more preferably 320°C or higher. A melting point within the above range enables to improve the heat resistance of the molded article to be obtained. The melting point is measured using a device for differential scanning calorimetry (DSC).

The fluororesin (II) is a copolymer of tetrafluoroethylene (TFE) and a perfluoroethylenic unsaturated compound represented by the following formula (1) :

CF₂=CF-Rf¹ (1)

wherein Rf¹ represents -CF₃. The fluororesin (II) may be one fluororesin or two or more fluororesins.

Use of the fluororesin (II) enables to obtain a molded article having both a low coefficient of kinetic friction and a high limiting PV value. For example, a polytetrafluoroethylene having no melt-processibility fails to provide a molded article having sufficiently low abrasion characteristics.

In order to provide a molded article having both a lower coefficient of kinetic friction and a higher limiting PV value, the perfluoroethylenic unsaturated compound represented by the formula (1) is hexafluoropropylene.

The fluororesin (II) is preferably a perfluoro polymer because it can provide a low coefficient of kinetic friction.

The fluororesin (II) preferably consists of 80 to 99 mol% of TFE and 1 to 20 mol% of the perfluoroethylenic unsaturated compound represented by the formula (1). The lower limit of the amount of the TFE constituting the fluororesin (II) is more preferably 85 mol%, still more preferably 87 mol%, particularly preferably 90 mol%, and more particularly preferably 93 mol%. The upper limit of the amount of the TFE constituting the fluororesin (II) is more preferably 97 mol%, and still more preferably 95 mol%.

The lower limit of the amount of the perfluoroethylenic unsaturated compound represented by the formula (1) constituting the fluororesin (II) is more preferably 3 mol%, and still more preferably 5 mol%. The upper limit of the amount of the perfluoroethylenic unsaturated compound represented by the formula (1) constituting the fluororesin (II) is more preferably 15 mol%, still more preferably 13 mol%, particularly preferably 10 mol%, and more particularly preferably 7 mol%.

The fluororesin (II) preferably has a melt viscosity of 0.3 to 3.0 kNsm⁻² at 60 sec⁻¹ and 390°C. A melt viscosity within this range can improve the processability, and enables to provide a low coefficient of kinetic friction and high limit PV characteristics. The lower limit of the melt viscosity is more preferably 0.4 kNsm⁻². The upper limit of the melt viscosity is more preferably 2.5 kNsm-², and still more preferably 2.0 kNsm⁻².

The melt viscosity of the fluororesin (II) is measured in conformity with ASTM D3835.

The fluororesin (II) preferably has a melt flow rate (MFR) of 0.1 to 100 g/10 min, more preferably 5 to 40 g/10 min, and still more preferably 10 to 40 g/10 min when measured at 372°C under a load of 5000 g. An MFR within the above range enables to decrease the coefficient of kinetic friction of the molded article to be produced from the resin composition of the present invention, and also the limiting PV value can be improved. The lower limit of the MFR is still more preferably 12 g/10 min, and particularly preferably 15 g/10 min. The upper limit of the MFR is still more preferably 38 g/10 min, and particularly preferably 35 g/10 min from the viewpoint of reducing the coefficient of kinetic friction.

The MFR of the fluororesin (II) is measured using a melt indexer in conformity with ASTM D3307-01.

The fluororesin (II) may have any melting point, but preferably has a melting point equal to or lower than the melting point of the aromatic polyether ketone resin (I) because, in molding, the fluororesin (II) is preferred to be already melt at the temperature where the aromatic polyether ketone resin (I) used is molten. For example, the melting point of the fluororesin (II) is preferably 230°C to 350°C. The melting point of the fluororesin (II) is determined as a temperature corresponding to a maximum value on the heat-of-fusion curve at a temperature-increasing rate of 10°C/min using a device for differential scanning calorimetry (DSC).

The fluororesin (II) may have been treated with fluorine gas or ammonia by a known method.

The resin composition of the present invention satisfies a melt viscosity ratio (I)/(II) between the aromatic polyether ketone resin (I) and the fluororesin (II) of 0.3 to 2.5.

A melt viscosity ratio (I)/(II) within this range leads to a molded article having a low coefficient of kinetic friction and high limit PV characteristics.

The above melt viscosity ratio (I)/(II) can lead to a film having less fish eyes, and give a better notched Izod strength and a small average dispersed particle size and a small maximum dispersed particle size.

The resin composition of the present invention satisfies the ratio (I):(II) by mass between the aromatic polyether ketone resin (I) and the fluororesin (II) of 95:5 to 50:50. A ratio (I):(II) by mass within the above range leads to production of a molded article having both a low coefficient of kinetic friction and high limit PV characteristics. If the ratio by mass of the fluororesin (II) to the aromatic polyether ketone resin (I) is more than 50, the strength is likely to decrease. If the ratio by mass of the fluororesin (II) to the resin (I) is less than 5, the coefficient of kinetic friction may be insufficient. The ratio (I): (II) by mass is more preferably 90:10 to 60:40.

The fluororesin (II) in the resin composition of the present invention is dispersed as particles in the aromatic polyether ketone resin (I), and has an average dispersed particle size of smaller than 3.0 µm. An average dispersed particle size of smaller than 3.0 µm leads to production of a molded article having both a low coefficient of kinetic friction and high limit PV characteristics. Too large an average dispersed particle size leads to insufficient wear properties or wear resistance properties.

In order to prevent cracking and chipping of sliding parts, an aromatic polyether ketone having better impact resistance has always been desired. A technique of forming an alloy with a rubber component is commonly employed to improve the impact resistance of thermoplastic resins. An aromatic polyether ketone, however, is a thermoplastic resin having high heat resistance. The mold-processing temperature thereof is higher than 350°C, and such aromatic polyether ketones are typically molded at around 400°C. Even if the aromatic polyether ketone is alloyed with a rubber component, the rubber component will be deteriorated by heat during mold processing, which is not practical. Thus, effective ways to improve the impact resistance of aromatic polyether ketones have not actually been found.

In such a situation, the present inventors have found that a resin composition containing a fluororesin (II) dispersed as particles in an aromatic polyether ketone resin (I) wherein the fluororesin (II) has an average dispersed particle size of smaller than 3.0 µm not only enables to obtain a molded article having both a low coefficient of kinetic friction and a high limiting PV value, but also unexpectedly causes great improvement of the impact resistance of the molded article.

The average dispersed particle size of the fluororesin (II) is preferably 2.0 µm or smaller, and still more preferably 0.3 µm or smaller because such a value can lead to a molded article having higher limit PV characteristics, and to better film formability.

The lower limit of the average dispersed particle size is not particularly limited, and may be 0.01 µm.

The resin composition of the present invention preferably satisfies that the average dispersed particle size of the fluororesin (II) is smaller than 0.3 µm and the maximum dispersed particle size is not larger than 0.8 µm.

An average dispersed particle size of smaller than 0.3 µm and a maximum dispersed particle size of not larger than 0.8 µm together lead to improved slidability in relation to the coefficient of kinetic friction and the limiting PV value and to formation of a thin film having less fish eyes. Further, such particle sizes lead to markedly improved impact resistance of a molded article to be obtained from the resin composition of the present invention.

The maximum dispersed particle size of the fluororesin (II) is preferably 0.75 µm or smaller, and more preferably 0.70 µm or smaller because such a value can lead to better film formability and to further reduction in the number of fish eyes.

The average dispersed particle size and the maximum dispersed particle size of the fluororesin (II) can be measured by microscopically observing the resin composition of the present invention using a confocal laser scanning microscope, or by microscopically observing a ultrathin section cut out of a pressed sheet produced from the resin composition of the present invention using a transmission electron microscope (TEM), and then binarizing the obtained image using an optical analysis device.

The resin composition of the present invention contains the aromatic polyether ketone resin (I) and the fluororesin (II), and may optionally further contain additional component(s). Any additional component(s) may be used, and examples thereof include fibrous reinforcing agents such as whiskers (e.g. potassium titanate whiskers), glass fibers, asbestos fibers, carbon fibers, ceramic fibers, potassium titanate fibers, aramid fibers, and other high-strength fibers; inorganic fillers such as calcium carbonate, talc, mica, clay, carbon powder, graphite, and glass beads; colorants; commonly used inorganic and organic fillers such as flame retardants; stabilizers such as minerals and flakes; lubricants such as silicone oil and molybdenum disulfide; pigments; conducting agents such as carbon black; impact resistance improvers such as rubber; and other additives.

The resin composition of the present invention may be produced in usual conditions using a mixer typically used for mixing a resin composition, such as a composition for molding. Examples of the mixer include mixing mills, Banbury mixers, pressure kneaders, and extruders. The mixer is preferably a twin-screw extruder because such a mixer is capable of reducing the average dispersed particle size of the fluororesin (II). The screw structure of a twin-screw extruder preferably satisfies L/D = 35 or higher, more preferably L/D = 40 or higher, and particularly preferably L/D = 45 or higher. The ratio L/D means effective length of screw (L)/screw diameter (D).

Based on the above description, the resin composition of the present invention is preferably one obtained by mixing an aromatic polyether ketone resin (I) and a fluororesin (II) using a twin-screw extruder having a ratio L/D of 35 or higher.

Examples of the method of producing the resin composition of the present invention include a method of mixing the aromatic polyether ketone resin (I) and the fluororesin (II) in a molten state.

Sufficient kneading of the aromatic polyether ketone resin (I) and the fluororesin (II) provides the resin composition of the present invention having a desired dispersion state. The dispersion state affects the coefficient of kinetic friction and limit PV characteristics of the molded article, and formation of thin films and formability thereof. Thus, an appropriate mixing method needs to be selected in order to achieve the desired dispersion state in the molded article to be obtained from the resin composition.

Examples of the method of producing the resin composition of the present invention include a method in which the aromatic polyether ketone resin (I) and the fluororesin (II) are charged into a mixer at a proper ratio, the above additional component(s) are optionally added, and the resins (I) and (II) are melt-kneaded at their melting points or higher.

The additional component(s) may be mixed independently with the aromatic polyether ketone resin (I) and the fluororesin (II) before the kneading of the resins (I) and (II), or may be mixed with the aromatic polyether ketone resin (I) and the fluororesin (II) when these resins are mixed.

The melt-kneading temperature may be appropriately determined depending on the conditions such as the kinds of the aromatic polyether ketone resin (I) and the fluororesin (II) to be used. For example, the temperature is preferably 360°C to 400°C. The kneading time is usually one minute to one hour.

The resin composition allows a molded article obtained therefrom to have a coefficient of kinetic friction of 0.22 or less. A coefficient of kinetic friction within the above range allows the resulting molded article to be suitably used as a sliding part. The coefficient of kinetic friction is more preferably 0.21 or less.

The resin composition allows a molded article obtained therefrom to have a limiting PV value of 800 or higher. The limiting PV value is more preferably 1000 or higher, still more preferably 1300 or higher, and particularly preferably 1500 or higher.

The resin composition allows a molded article obtained therefrom to have a notched Izod strength of 30 kJ/m² or higher. The notched Izod strength is preferably 40 kJ/m² or higher. In order to achieve a high Izod strength, the average dispersed particle size of the fluororesin (II) needs to be controlled to smaller than 0.3 µm.

In order to suppress cracking and chipping of a molded article, the notched Izod strength of the molded article obtained is also preferably 60 kJ/m² or higher.

A molded article formed from the resin composition of the present invention is another aspect of the present invention.

The molded article formed from the resin composition of the present invention has, in addition to the wear properties or wear resistance properties and the impact resistance, heat resistance, chemical resistance, solvent resistance, strength, rigidity, low chemical permeability, dimensional stability, flame retardancy, electrical properties, and durability. In the electrical, electronic, and semiconductor fields, the molded article may be used for components of semiconductor- and liquid crystal device-manufacturing devices (e.g. CMP retainer rings, etching rings, silicon wafer carriers, and IC chip trays), insulating films, small button cells, cable connectors, and aluminum electrolytic condenser body casings. In the automobile field, the molded article may be used for thrust washers, oil filters, gears for auto air-conditioner controlling units, gears for throttle bodies, ABS parts, AT seal rings, MT shift fork pads, bearings, seals, and clutch rings. In the industrial field, the molded article may be used for compressor components, cables for mass transport systems, conveyor belt chains, connectors for oil field development machinery, and pump components for hydraulic pressure driver systems (e.g. bearings, port plates, ball joints of pistons). In the aerospace field, the molded article may be used for cabin interior components and fuel pipe protecting materials in aircrafts. The molded article may also be used for other products such as food and beverage production equipment components, and medical instruments (e.g. sterile instruments, gas and liquid chromatographs).

The molded article may have any of various shapes, such as a sheet shape, film shape, rod shape, and pipe shape. The molded article of the present invention allows for production of a thin film with less fish eyes, and thus is particularly suitable for a sheet-like or film-like molded article.

Another aspect of the present invention is a molded article for a sliding part obtained from the resin composition. A molded article for a sliding part which is formed from the above resin composition has a low coefficient of kinetic friction, and thus is suitable for use as a sliding part. Since the molded article contains a fluororesin, the molded article is also excellent in properties such as chemical resistance, weather resistance, non-adhesiveness, water repellence, and electrical properties.

Examples of the molded article for sliding parts include, but not particularly limited to, sealants, gears, actuators, pistons, bearings, bearing retainers, bushings, switches, belts, bearings, cams, rollers, and sockets.

Any conditions may be applicable with respect to the molding machine used in the method of producing a molded article, and the molding machine may be used in known conditions, for example. The molding temperature is usually preferred to be equal to or higher than the melting point of the aromatic polyether ketone resin (I) to be used. Also, the molding temperature is preferably below the lower one of the decomposition temperature of the fluororesin (II) and the decomposition temperature of the aromatic polyether ketone resin (I). The molding temperature may be, for example, 250°C to 400°C.

The molded article of the present invention may be formed by a molding method commonly used for a thermoplastic resin composition, such as injection molding, extrusion molding, press molding, blow molding, calender molding, and casting molding, depending on the kind, use, and shape of the molded article to be obtained. The molded article may also be produced by a molding method which is a combination of the above molding methods. The molded article may be obtained through composite molding of the resin composition of the present invention and other polymer(s).

### EXAMPLES

The present invention is described in the following examples. The present invention is not limited to these examples.

### <Measurement of MFR>

The mass (g/10 min) of the polymer flowing out from a nozzle (inner diameter: 2 mm, length: 8 mm) at 372°C under a load of 5000 g was determined using a melt indexer (product of Toyo Seiki Seisaku-sho, Ltd.) in conformity with ASTM D3307-01.

### <Production of pressed sheet molded article>

The resin compositions produced in the examples and comparative examples each were compression molded in a heat press molding machine at 380°C and 5 MPa, so that 3-mm-thick sheets were produced.

### <Determination of limiting PV value>

A specimen in a size of 3 cm (length) × 3 cm (width) × 3 mm (thickness) was cut out of each pressed sheet obtained by the above method. The limiting PV value of the specimen was determined in conformity with the A method of JIS K7218 using a friction-and-wear tester (product of A&D Co., Ltd.) and a steel material S45C (#240 sandpaper finishing) as an opposite material. The speed was constant at 3 m/sec, and the surface pressure was increased by 20 N/10 min starting from 20 N.

### <Measurement of coefficient of kinetic friction>

The coefficient of kinetic friction of each pressed sheet obtained by the above method was determined using a ball-on-disk SRV friction-and-wear tester (product of OPTIMOL) at room temperature and 50 Hz.

### <Measurement of notched Izod strength>

A specimen for notched Izod strength measurement was cut out of each pressed sheet produced by the above method, and the notched Izod strength was measured in conformity with JIS K7110 at room temperature using an Izod impact tester (product of Toyo Seiki Seisaku-sho, Ltd.).

### <Measurement of number of fish eyes>

The number of fish eyes was measured using a film having sides of 12 cm × 50 cm and a thickness of 25 µm produced by T-die extrusion.
○: Less than 10 fish eyes
Δ: Not less than 10 fish eyes but less than 30 fish eyes
×: Not less than 30 fish eyes

### <Calculation of average dispersed particle size and maximum dispersed particle size>

Each pressed sheet produced by the above method was trimmed to have a 1-mm-square tip by a razor for trimming. The sheet was then fixed in the sample holder of an ultramicrotome (ULTRACUT S, product of Leica Microsystems), and the chamber was cooled with liquid nitrogen to -80°C inside. Thereby, a 90-nm-thick ultrathin section was cut out of the specimen.

The ultrathin section obtained was taken out using a platinum ring to which a 20% ethanol solution was deposited, and then bonded to a copper mesh sheet (200 A, φ3.0 mm, product of Okenshoji Co., Ltd.).

The ultrathin section bonded to the copper mesh sheet was observed using a transmission electron microscope (H7100FA, product of Hitachi, Ltd.).

A negative film obtained by the microscopic observation was scanned into an electronic image using a scanner (GT-9400UF, product of EPSON CORP.). The electronic image was then binarized using an optical analyzer (LUZEX AP, product of Nireco Corp.), and the average dispersed particle size and the maximum dispersed particle size of the dispersed phase were determined.

### <Measurement of melt viscosity>

The melt viscosity of the aromatic polyether ketone resin was measured at 60 sec⁻¹ and 390°C in conformity with ASTM D3835.

The melt viscosity of the fluororesin was measured at 60 sec⁻¹ and 390°C in conformity with ASTM D3835.

The following materials were used in the examples and comparative examples.
- Aromatic polyether ketone resin (1): Polyether ether ketone (melt viscosity: 1.48 kNsm⁻²)
- Aromatic polyether ketone resin (2): Polyether ether ketone (melt viscosity: 1.19 kNsm⁻²)
- Aromatic polyether ketone resin (3): Polyether ether ketone (melt viscosity: 0.31 kNsm⁻²)
- Fluororesin (1): Tetrafluoroethylene/hexafluoropropylene copolymer (compositional ratio by weight: tetrafluoroethylene/hexafluoropropylene/perfluoro(propyl vinyl ether) = 87.5/11.5/1.0, MFR: 23 g/10 min, melt viscosity: 0.55 kNsm⁻²)
- Fluororesin (2): Tetrafluoroethylene/hexafluoropropylene copolymer (compositional ratio by weight: tetrafluoroethylene/hexafluoropropylene/perfluoro(propyl vinyl ether) = 87.5/11.5/1.0, MFR: 60 g/10 min, melt viscosity: 0.28 kNsm⁻²)
- Fluororesin (3): Tetrafluoroethylene/hexafluoropropylene copolymer (compositional ratio by weight: tetrafluoroethylene/hexafluoropropylene = 88.5/11.5, MFR: 6 g/10 min, melt viscosity: 2.23 kNsm⁻²)
- Fluororesin (4): polytetrafluoroethylene (trade name: LUBRON L5, product of Daikin Industries, Ltd.)
- Fluororesin (5): ethylene/tetrafluoroethylene copolymer (trade name: NEOFLON EP541, product of Daikin Industries, Ltd., melt viscosity: 2.27 kNsm⁻²)

### <Example 1>

The aromatic polyether ketone resin (2) and the fluororesin (1) were preliminarily mixed at the ratio (parts by mass) shown in Table 1. Then, the mixture was melt-kneaded using a twin-screw extruder (φ15 mm, L/D = 60) at a cylinder temperature of 390°C and a screw rotation speed of 300 rpm, thereby producing a resin composition. A specimen was prepared from the resulting resin composition by the above method, and the limiting PV value, coefficient of kinetic friction, and notched Izod strength were determined using the specimen. Also, using the specimen, the average dispersed particle size and the maximum dispersed particle size of the fluororesin (1) were calculated.

### <Example 2>

The aromatic polyether ketone resin (2) and the fluororesin (1) were preliminarily mixed at the ratio (parts by mass) shown in Table 1. Then, the mixture was melt-kneaded using a twin-screw extruder (φ15 mm, L/D = 60) at a cylinder temperature of 390°C and a screw rotation speed of 500 rpm, thereby producing a resin composition. A specimen was prepared from the obtained resin composition by the above method, and the limiting PV value, coefficient of kinetic friction, and notched Izod strength were determined using the specimen. Also, using the specimen, the average dispersed particle size and the maximum dispersed particle size of the fluororesin (1) were calculated.

### <Example 3>

The aromatic polyether ketone resin (2) and the fluororesin (1) were preliminarily mixed at the ratio (parts by mass) shown in Table 1. Then, the mixture was melt-kneaded using a twin-screw extruder (φ15 mm, L/D = 60) at a cylinder temperature of 390°C and a screw rotation speed of 300 rpm, thereby producing a resin composition. A specimen was prepared from the obtained resin composition by the above method, and the limiting PV value, coefficient of kinetic friction, and notched Izod strength were determined using the specimen. Also, using the specimen, the average dispersed particle size and the maximum dispersed particle size of the fluororesin (1) were calculated.

### <Example 4>

The aromatic polyether ketone resin (2) and the fluororesin (3) were preliminarily mixed at the ratio (parts by mass) shown in Table 1. Then, the mixture was melt-kneaded using a twin-screw extruder (φ15 mm, L/D = 60) at a cylinder temperature of 390°C and a screw rotation speed of 500 rpm, thereby producing a resin composition. A specimen was prepared from the obtained resin composition by the above method, and the limiting PV value, coefficient of kinetic friction, and notched Izod strength were determined using the specimen. Also, using the specimen, the average dispersed particle size and the maximum dispersed particle size of the fluororesin (3) were calculated.

### <Example 5>

The aromatic polyether ketone resin (3) and the fluororesin (1) were preliminarily mixed at the ratio (parts by mass) shown in Table 1. Then, the mixture was melt-kneaded using a twin-screw extruder (φ15 mm, L/D = 60) at a cylinder temperature of 390°C and a screw rotation speed of 500 rpm, thereby producing a resin composition. A specimen was prepared from the obtained resin composition by the above method, and the limiting PV value, coefficient of kinetic friction, and notched Izod strength were determined using the specimen. Also, using the specimen, the average dispersed particle size and the maximum dispersed particle size of the fluororesin (1) were calculated.

### <Comparative Example 1>

Using the aromatic polyether ketone resin (1) alone, a specimen was produced by the above method. Then, the limiting PV value, coefficient of kinetic friction, and notched Izod strength were determined using the specimen.

### <Comparative Examples 2 and 3>

The aromatic polyether ketone resin (1) and the fluororesin (4) or fluororesin (5) were preliminarily mixed at the ratio (parts by mass) shown in Table 1. Then, the mixture was melt-kneaded using a twin-screw extruder (φ15 mm, L/D = 60) at a cylinder temperature of 390°C and a screw rotation speed of 300 rpm, thereby producing a resin composition. The obtained resin composition was formed into a pressed sheet by the above method, and the limiting PV value, coefficient of kinetic friction, and notched Izod strength were determined. Also, an ultrathin section was cut out of the pressed sheet, and the average dispersed particle size and the maximum dispersed particle size of the fluororesin (4) or (5) were calculated.

### <Comparative Example 4>

The aromatic polyether ketone resin (3) and the fluororesin (3) were preliminarily mixed at the ratio (parts by mass) shown in Table 1. Then, the mixture was melt-kneaded using a twin-screw extruder (φ15 mm, L/D = 60) at a cylinder temperature of 390°C and a screw rotation speed of 500 rpm, thereby producing a resin composition. The obtained resin composition was formed into a pressed sheet by the above method, and the limiting PV value, coefficient of kinetic friction, and notched Izod strength were determined. Also, an ultrathin section was cut out of the pressed sheet, and the average dispersed particle size and the maximum dispersed particle size of the fluororesin (3) were calculated.

### <Comparative Example 5>

The aromatic polyether ketone resin (1) and the fluororesin (2) were preliminarily mixed at the ratio (parts by mass) shown in Table 1. Then, the mixture was melt-kneaded using a twin-screw extruder (φ15 mm, L/D = 60) at a cylinder temperature of 390°C and a screw rotation speed of 300 rpm, thereby producing a resin composition. The obtained resin composition was formed into a pressed sheet by the above method, and the limiting PV value, coefficient of kinetic friction, and notched Izod strength were determined. Also, an ultrathin section was cut out of the pressed sheet, and the average dispersed particle size and the maximum dispersed particle size of the fluororesin (2) were calculated.

### <Comparative Example 6>

The aromatic polyether ketone resin (2) and the fluororesin (1) were preliminarily mixed at the ratio (parts by mass) shown in Table 1. Then, the pre-mixed components were mixed using a vent-type extruder (φ50 mm, L/D = 24) at a cylinder temperature of 390°C and a screw rotation speed of 25 rpm. The mixture was extruded from a slit base having a width of 500 mm, and then stretched into a 25-µm-thick film by a take-up roll at 130°C. Using this film, the average dispersed particle size and the maximum dispersed particle size of the fluororesin (1) were calculated.

**[Table 1]**

| | Example 1 | Example 2 | Example 3 | Example 4 | Example 5 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| Polyether ketone resin (1) (parts by mass) | | | | | | 100 | 80 | 80 | | 80 | |
| Polyether ketone resin (2) (parts by mass) | 80 | 80 | 70 | 80 | | | | | | | 80 |
| Polyether ketone resin (3) (parts by mass) | | | | | 80 | | | | 80 | | |
| Fluororesin (1) (parts by mass) | 20 | 20 | 30 | | 20 | | | | | | 20 |
| Fluororesin (2) (parts by mass) | | | | | | | | | | 20 | |
| Fluororesin (3) (parts by mass) | | | | 20 | | | | | 20 | | |
| Fluororesin (4) (parts by mass) | | | | | | | 20 | | | | |
| Fluororesin (5) (parts by mass) | | | | | | | | 20 | | | |
| Rotation speed (rpm) | 300 | 500 | 300 | 500 | 500 | - | 300 | 300 | 500 | 300 | 25 |
| Melt viscosity ratio (polyether ketone resin/fluororesin) | 2.16 | 2.16 | 2.16 | 0.53 | 0.56 | - | - | 0.65 | 0.14 | 5.29 | 2.16 |
| Average dispersed particle size (µm) | 0.19 | 0.15 | 0.20 | 0.16 | 0.27 | - | 73 | 2.80 | 0.42 | 0.51 | 220 |
| Maximum dispersed particle size (µm) | 0.44 | 0.67 | 0.66 | 0.51 | 0.69 | - | 210 | 8.20 | 1.19 | 1.85 | 384 |
| Limiting PV value (kPa·m/s) | 1500 | 1500 | 1500 | 1000 | 1000 | 750 | 600 | 750 | 900 | 800 | - |
| Coefficient of kinetic friction | 0.21 | 0.19 | 0.20 | 0.22 | 0.20 | 0.24 | 0.15 | 0.23 | 0.24 | 0.28 | - |
| Notched Izod strength (kJ/m²) | 88 | 90 | 95 | 82 | 73 | 17 | 10 | 15 | 80 | 60 | - |
| Number of fish eyes | ○ | ○ | ○ | ○ | ○ | ○ | × | × | Δ | × | × |

### INDUSTRIAL APPLICABILITY

The resin composition of the present invention is suitable for molding materials used for components which are required to have high wear properties or wear resistance properties, such as automobile components, industrial components, and electrical and electronic components.

## Claims

1. A resin composition comprising
- an aromatic polyether ketone resin (I); and
- a fluororesin (II) which is a copolymer of tetrafluoroethylene and a compound of the formula
CF₂=CF-Rf¹ (1)
wherein Rf¹ is -CF₃;
wherein
the resins (I) and (II) are present at a mass ratio (I) : (II) of 95:5 to 50:50;
the resins (I) and (II) satisfy a melt viscosity ratio (I)/(II) of 0.3 to 2.5, the melt viscosity of resins (I) and (II) being measured at 60 sec⁻¹ and 390°C in conformity with ASTM D3835; and
the resin (II) is dispersed, as particles having an average dispersed particle size of < 3.0 µm, in the aromatic polyether ketone resin (I).

2. The resin composition of claim 1, wherein the fluororesin (II) has an average dispersed particle size of < 0.3 µm and a maximum dispersed particle size of ≤ 0.8 µm.

3. The resin composition of claim 1 or 2, wherein the fluororesin (II) has a melt flow rate of 0.1-100 g/10 min, the melt flow rate being the mass (g/10 min) of the polymer flowing out from a nozzle at 372°C under a load of 5000 g, which is determined using a melt indexer in conformity with ASTM D3307-01.

4. The resin composition of any of claims 1-3, wherein the resin (I) is a polyether ether ketone.

5. A molded article comprising the resin composition of any of claims 1-4.

6. The molded article of claim 5 which is a sliding part.

7. The molded article of claim 5 or 6, which is a sealant, a gear, an actuator, a piston, a bearing, or a bushing.

## Patentansprüche

1. Harzzusammensetzung, umfassend
- ein aromatisches Polyether-Keton-Harz (I); und
- ein Fluorharz (II), das ein Copolymer aus Tetrafluorethylen und einer Verbindung der Formel
CF₂=CF-Rf¹ (1)
ist, worin Rf¹ -CF₃ ist;
worin
die Harze (I) und (II) in einem Massenverhältnis (I):(II) von 95:5 bis 50:50 vorliegen;
das Verhältnis der Schmelzviskositäten (I)/(II) der Harze (I) und (II) 0.3 bis 2.5 ist, worin die Schmelzviskosität der Harze (I) und (II) gemäß ASTM D3835 bei 60 sec⁻¹ und 390°C gemessen wird; und
das Harz (II) als Teilchen mit einer durchschnittlichen dispergierten Teilchengröße von < 3.0 µm im aromatischen Polyether-Keton-Harz (I) dispergiert ist.

2. Harzzusammensetzung gemäß Anspruch 1, worin das Fluorharz (II) eine durchschnittliche dispergierte Teilchengröße von < 3.0 µm und eine maximale dispergierte Teilchengröße von ≤ 0.8 µm hat.

3. Harzzusammensetzung gemäß Anspruch 1 oder 2, worin das Fluorharz (II) eine Schmelzflussrate von 0.1-100 g/10 min hat, und die Schmelzflussrate die Masse (g/10 min) des Polymers ist, die bei 372°C unter der Last von 5000 g aus einer Düse fließt, und mit einem Schmelzindexer gemäß ASTM D3307-01 bestimmt wird.

4. Harzzusammensetzung gemäß mindestens einem der Ansprüche 1-3, worin das Harz (I) ein Polyether-Ether-Keton ist.

5. Formartikel, der die Harzzusammensetzung gemäß mindestens einem der Ansprüche 1-4 umfasst.

6. Formartikel gemäß Anspruch 5, der ein Gleitelement ist.

7. Formartikel gemäß Anspruch 5 oder 6, der eine Dichtung, ein Getriebe, ein Antriebselement, ein Kolben, ein Kugellager oder eine Muffe ist.

## Revendications

1. Composition de résine comprenant
- une résine de polyéther-cétone aromatique (I) ; et
- une résine fluorée (II) qui est un copolymère de tétrafluoroéthylène et d'un composé de la formule
CF₂=CF-Rf¹ (1)
dans laquelle Rf¹ est -CF₃ ;
dans laquelle
les résines (I) et (II) sont présentes dans un rapport massique (I) : (II) de 95:5 à 50:50 ;
les résines (I) et (II) satisfont à un rapport de viscosité à l'état fondu (I) / (II) de 0,3 à 2,5, la viscosité à l'état fondu des résines (I) et (II) étant mesurée à 60 sec⁻¹ et 390°C conformément à la norme ASTM D3835 ; et
la résine (II) est dispersée, sous forme de particules ayant une granulométrie moyenne dispersée < 3,0 µm, dans la résine de polyéther-cétone aromatique (I).

2. Composition de résine selon la revendication 1, dans laquelle la résine fluorée (II) présente une granulométrie moyenne dispersée < 0,3 µm et une granulométrie maximale dispersée ≤ 0,8 µm.

3. Composition de résine selon la revendication 1 ou 2, dans laquelle la résine fluorée (II) a un indice de fluidité à chaud de 0,1-100 g / 10 min, l'indice de fluidité à chaud étant la masse (g / 10 min) du polymère s'écoulant d'une buse à 372°C sous une charge de 5 000 g, qui est déterminé en utilisant un indexeur à l'état fondu conformément à la norme ASTM D3307-01.

4. Composition de résine selon l'une quelconque des revendications 1 à 3, dans laquelle la résine (I) est une polyéther-éther-cétone.

5. Article moulé comprenant la composition de résine selon l'une quelconque des revendications 1 à 4.

6. Article moulé selon la revendication 5, qui est une pièce coulissante.

7. Article moulé selon la revendication 5 ou 6, qui est un agent d'étanchéité, un engrenage, un actionneur, un piston, un palier ou une douille.
